(19) Europäisches Patentamt
European Patent Office
Office européen des brevets

(11) Publication number : 0 297 062 B1

(12) **EUROPEAN PATENT SPECIFICATION**

(45) Date of publication of patent specification :
11.09.91 Bulletin 91/37

(51) Int. Cl.⁵ : **H04B 7/26**

(21) Application number : 88850141.8

(22) Date of filing : 22.04.88

(54) Method of equalizing the blocking probability in a partitioned cellular mobile radio system.

(30) Priority : 27.05.87 SE 8702243

(43) Date of publication of application :
28.12.88 Bulletin 88/52

(45) Publication of the grant of the patent :
11.09.91 Bulletin 91/37

(84) Designated Contracting States :
DE FR GB IT NL

(56) References cited :
DE-A- 3 528 974
DE-C- 2 659 570
US-A- 4 144 411

(73) Proprietor : TELEFONAKTIEBOLAGET L M
ERICSSON
S-126 25 Stockholm (SE)

(72) Inventor : Stavenow, Bengt Gunnar
Kävlingevägen 21
S-222 40 Lund (SE)
Inventor : Eklund, Berth Villy
L Södergatan 14
S-223 53 Lund (SE)
Inventor : Sällberg, Hans Mikael Krister
Trollebergsvägen 21 2trp
S-222 29 Lund (SE)

EP 0 297 062 B1

## Description

### TECHNICAL FIELD

The present invention relates to a method of equalizing the blockage probability in a partitioned cellular mobile radio system, more specifically such a system in which a number of smaller cells are overlaid on the same number of large cells. The method is primarily applicable to a digital mobile radio system where communication takes place on the time division multiple access (TDMA) principle, but it is also possible to use in a traditional, analogue frequency division multiple access system, although with certain limitations.

### BACKGROUND ART

The large demand for communication with mobile telephony has led to the situation that in many cases the frequency bands assigned to it are insufficient with present arrangements. This problem can be handled in two principly different ways, a) the frequency spectrum can be utilized more effectively, and b) more effective channel assignment algorithms can be introduced. Digital mobile telephony gives improved spectrum utilization, due to increased co-channel interference tolerance and reduced effect of fading by the introduction of effective channel coding. This capacity raising aspect will only be dealt with indirectly hereinafter, and the continued discussion will instead deal with how different types of channel assignment algorithms can be applied to increase the capacity of the system.

The systems which are commercially operative today mostly use a fixed channel assignment algorithm. This means that each base station has been assigned a specific channel set. The different channel sets are repeated with the least permitted distance, the inference distance, between two base stations which send on the same frequencies. There are a number of drawbacks to this principle, e.g. great variation of the blockages in different cells for varying loading between the cells, and the capacity obtained is relatively limited, seen in total.

To obtain high channel utilization and lower blockage probability for varying load, a dynamic channel assignment principle has been proposed, see the reference (1) and (2). In a system with channel assignment, all channels in the system belong to a pool common to all cells. When a call is then to be established, there is assigned form the pool a channel which is not used within the interference area of the cell in question. The size of the interference area is given by the interference distance.

The dynamic channel assignment principle gives the best performance for low load. Its flexibility give the system lower blockage probability and less variations of the blockages between different cells for varying loading between the cells compared with the fixed channel assignment principle.

A further method which has better general properties involves hybrid channel assignment, which is a combination of fixed and dynamic assignment. In this case, each cell is assigned a certain number of fixed channels, and the remaining channels belong to the common pool. The channels from the pool are used when there is no unoccupied channel in the fixed set. The capacity increases if "rearranging" is introduced, that is to say where a cell has a call on a channel from the fixed group, when this call is disconnected, a call which is established on a dynamic channel (if one is being utilized), is moved over to the fixed channel. A system of hybrid channel assignment has the advantages of the dynamic principle in many cases, but gives a more robust performance for high loading.

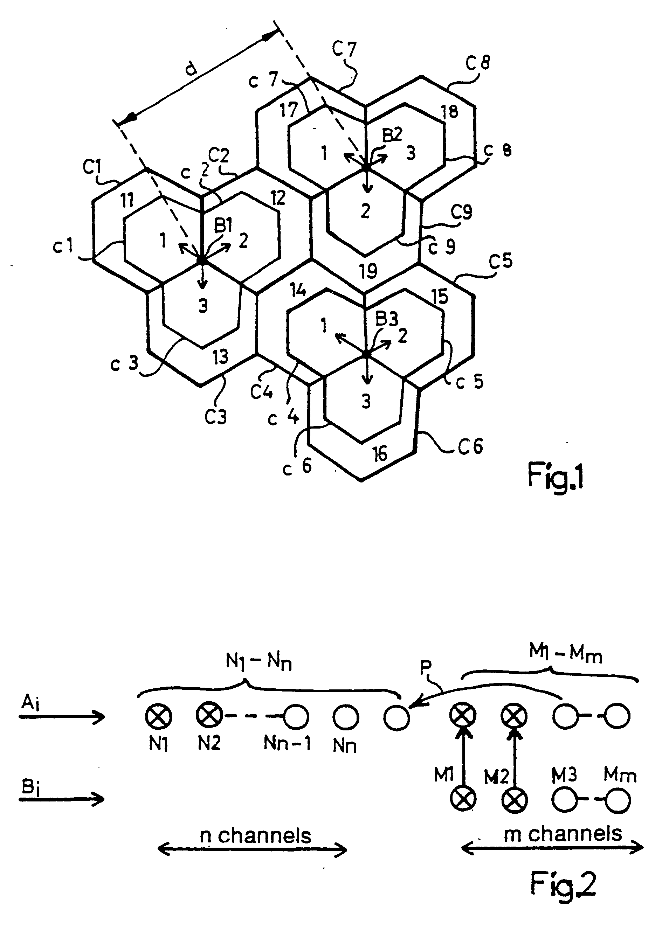

Great capacity gains can be made by introducing a system with overlaid channel reuse patterns in cell clusters (Figure 1). This is a good method of upgrading the capacity in an already existing system, since no new base stations need to be introduced. The method utilizes the situation that a mobile station (mobile), which is closed to the base station (base) from the aspect of signal reception conditions (in principle the geographical distance), can be assigned a channel which has a shorter channel reuse distance, in other words the mobile can be assigned a channel which belongs to a cell cluster comprising fewer cells, and which is overlaid on the greater cell cluster. This method is called "reuse partitioning", see reference (3). Seen in general, several clusters can be overlaid, see reference (4). The method gives large capacity gains since the resulting system is given a higher degree of channel reuse.

References to the prior art :

(1) D.C Cox and D.O Reudink, "A comparison of Some Channel Assignment Strategies in Large-Scale Mobile Communication Systems, "IEEE Trans. on Comm, Apr. 1972.
(2) D.C Cox and C.O Reudink, "Increasing Channel Occupancy in Large-Scale Mobile Radio Systems Dynamic Channel Reassignment, "IEEE Trans om Veh. Tech., Nov 1973.
(3) S.W. Halpern, "Reuse partitioning in cellular systems", Proc of IEEE VEH. Techn. Conf. 1983 p.p. 322-237.
(4) J.F. Whitehead, "Cellular Spectrum Efficiency via Reuse Planning," IEEE Conference 1985.

### DISCLOSURE OF INVENTION

A problem with overlaid cells patterns in reuse partitioning is that the blockage for mobiles which are comparatively far from the base (B traffic) is much higher than for mobiles which are closer to the base (A traffic). According to the present invention the blockages for B traffic can be reduced with a small loss in total cleared traffic, if some few channels are reserved in some sense for the B traffic. A concrete method is to use hybrid channel assignment for channels associated with the large cell cluster, and to reserve the dynamic channels in the hybrid model for B traffic. Such a system with a total of 800 channels, comprising 3-cell clusters combined with 9-cell clusters give a capacity gain of over 40% relative to a system with 9 cell clusters and fixed channel assignment, when blocking is 5% and the total offered traffic is divided equally on the two cell clusters (A traffic is equally as great as B traffic).

The method in accordance with the invention is characterized according to the characterized portion of claim 1.

## BRIEF DESCRIPTION OF DRAWINGS

The invention will now be described in more detail with reference to the accompanying drawings.

Figure 1 schematically illustrates a part of a cellular mobile telephone system ;

Figure 2 schematically illustrates the assignment of a number of channels for two different traffic flows in the system according to Figure 1 ;

Figure 3 schematically illustrates an assignment as in Figure 2, but with so-called protection for specific channels in accordance with the invention ;

Figure 4 schematically illustrates the assignment of channels according to Figure 2, but with protection depending on the states of specific channels, so called state protection in accordance with the invention ;

Figure 5 is a diagram illustrating the advantage with the method in accordance with the invention.

## BEST MODES FOR CARRYING OUT THE INVENTION

Figure 1 illustrates a fragmentary portion of a cellular mobile radio system with overlaid cells where the method in accordance with the invention is applicable. Denotations C1. C2...., C9 have been given to a number of large cells. The denotations c1,...., c9 have been given to a number of small cells which are overlaid the large cells, the number of small cells being the same as the number of large cells.

The cells in this example are partitioned so that three large cells and three small cells are grouped about a common base, there being three bases B1, B2, B3. All small cells are partitioned into three 3-cell clusters, while the large cells constitute a 9-cell cluster. The channel reuse distance for the small cells is denoted by $d$ in Figure 1. This means that the same channel group (1, 2, 3) for the small cells can be reused from one base to any other separated from the first one by the distance d. The small cell cluster (c1-c3) therefore disposes over the same channel group as the small cell clusters (c4-c6) and (c7-c9). The number of channels assigned to each small cell in the system is denoted hereinafter by n, and this group of channels is designated "the 3-cluster group". Each large cell C1-C9 is assigned m channels in a corresponding way, and these channels can be utilized within the whole of the area associated with a large cell, this group being designated hereinafter as "the 9-cluster group". Consequently n + m channels are potentially available for a mobile in a small cell. A mobile within a large cell but outside a small cell has m channels potentially available. It should be noted that the sizes of the small and large cell clusters are solely taken as an example, and other sizes of the clusters can be used.

The fixedly assigned channels of each cell are divided into two groups, one for the 3-cell cluster and one for the 9-cell cluster. Each base B1-B3 transmits with the same power irrespective of to what cluster group the channel belongs. It is the transmission conditions prevailing for the moment which decide whether a mobile is in a 3- or 9-cell cluster. The probability that a mobile is in the area where a channel belonging to the 3-cell cluster channel group (the 3-cluster group) can be used increases with decreasing distance to the base. When establishing a connection a test is first made as to whether a channel from the 3-cluster group can be used. If this is not the case, the mobile is assigned an unoccupied channel from the 9-cluster group. It is decided in this way whether the mobile is in a 3- or 9-cell cluster, and the denser channel reuse condition is primarily used.

The possible distribution of the number of channels in both groups is given by the relationship :
"total number of channels in the system"
= 3 × "number of channels in the 3-cluster group" +
9 × "number of channels in the 9-cluster group"
= 3 n + 9 m

For the constant number of channels in the system, it will be seen from the formula above that if a channel is moved from the 9-cluster group to the 3-cluster group, the number of channels in the 9-cluster group decreases by 1, while the number of channels in the 3-cluster group increases by 3.

Mobiles close to the base are primarily assigned channels belonging to the 3-cell cluster. If these are occupied, the mobile can be assigned a channel belonging to the 9-cell cluster. Mobiles remote from the base are assigned channels belonging to the 9-cell cluster. There is a certain possibility that a mobile at a great distance can be connected up to an unoccupied channel from the 3-cluster group. The probability of this taking place is small, since the same channel must also be unoccupied in the interfering cells in an other 3-cluster group. This can also be expressed by saying that the service area size varies with prevailing interference conditions.

If the quality of a channel in the 3-cluster group is to poor, the base can either assign the mobile an other channel from the same group or a channel from the 9-cluster group. Handover in the other direction from the 9-cluster group to the 3-cluster group is more difficult. This requires that the mobile continuously carries out measurements to decide whether it has moved into the 3-cell cluster. To give the system as high as capacity as possible, the channels from the 3-cluster group shall be used as much as possible.

Figure 2 schematically illustrates how a number of channels N1-Nn in large cell has been assigned to the 3-cluster group and how a number of channels M1-Mn has been assigned to the 9-cluster group. The incoming traffic denoted by A (the A traffic) comprises calls from mobiles within the overlaid small cell, and the incoming traffic denoted by B (the B traffic) is consequently the remaining calls within the large cell. A crossed ring at the respective channel denotation indicates that the channel is temporarily occupied. Since the channels M1-Mm can be utilized by both A traffic and B traffic, as far as the A traffic is looking for a channel within the 9-cluster group, an occupied channel Mk for the B traffic will also be occupied for A traffic and vice versa. This is denoted in Figure 2 by double rings, and an occupied channel is denoted by a cross in both rings and with an arrow departing from the ring associated with the traffic type which has occupied the channel. In the example according to Figure 2, B traffic has oocupied the channels M1, M2, which thus appear occupied to A traffic. A traffic has occupied and the channels N1, N2.

Two different types of rearranging are possible. With the first type it is possible to more or less permanently move channels between the different channel groups (the 3-cluster group and the 9-cluster group). Such rearranging can increase the total capacity in the system, and the number of channels in the respective group is dependant on the magnitude relationship between the A and B traffic. With the second type of rearranging, a mobile in a small cell where the mobile cell is initially compelled to use a channel from the 9-cluster group, due to all the channels occupied when the call came, has its call moved from the 9-cluster group to the 3-cluster group, should a channel become unoccupied in the latter during the established call by the mobile. This of rearranging denoted by the arrow P in Figure 2, also raises the total traffic capacity in the system.

A drawback with the basic configuration described above, is that the blockages for the mobiles within the small cells (the A traffic) will always be lower, in many cases radically lower than the blockages for the B traffic. From the system aspect, this is a serious problem, since the blockages at the perimeter of a large cell should be low to facilitate rearranging of calls between different large cells. The present invention is conceived for solving this problem.

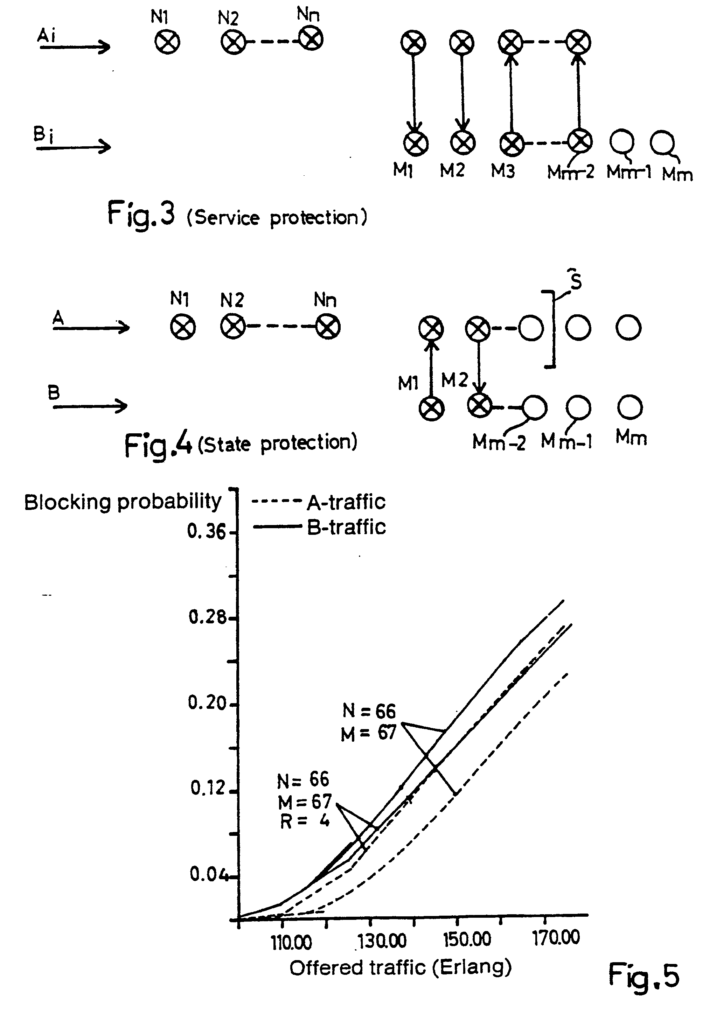

In accordance with the invention it is proposed to introduce protection for specific channels, known as "service protection" in the 9-cluster group. The channel protection means that a plurality, say k, of specific channels in the 9-cluster group is reserved for B traffic and must not be used by the A traffic. The number of channels for the A traffic which are potentially available will in this case be n + m − k, whereas the corresponding number for the B traffic will still be m. The blockages for the A traffic thus do indeed increase, but not to such a great degree as the reduction of the blockages for the B traffic. There is thus obtained equalization of the two blockages without loosing total traffic clearing capacity. The channel protection for k = 2 is illustrated in Figure 3, by the two last channels in the 9-cluster group being provided with rings solely for the B traffic. The k reserved channels may be dynamic or fixed channels, or both dynamic and fixed (hybrid channel assignment) according to what has been described above under "background art".

A further development of the idea according to Figure 3 is illustrated in Figure 4, in which occupied channels in the 9-cluster group are denoted by a cross in the double rings which are farthest to the left in the Figure. According to this embodiment there is introduced, instead of protection of specific channels, a channel protection depending on state, so-called "state protection". This channel protection for protecting k channels, means that the A traffic is allowed to use a channel in the 9-cluster group if the total number of occupied channels in the 9-cluster group, relating to both A and B traffic is less than m-k at the time of the call. In Figure 4 there is illustrated the channel state protection for k = 2 by a vertical dash annotated with the letter S and placed immediately to the left of the ring for the A traffic which marks the (m − l)th channel in the 9-cluster group. According to this idea, all the channels in the 9-cluster group are fixed.

Figure 5 is a diagram of the blockage probability as a function of the offered traffic service for a mobile telephone system utilizing the method in accordance with the invention for the case of state-dependent channel protection (according to Figure 4). The dashed lines denote the blockage for the A traffic and the full lines the blockage for the B traffic. Two different cases are illustrated in Figure 5, with the same number of channels in both cases, namely n = 66 and m = 67. In the first case the blockage probability of the system without any reservation of the channels is illustrated (Figure 2).

Both characteristics $a_1$-$a_2$ are sharply separated here, which denotes the differences in blockage. In the second case, when the method according to the invention is applied, and when 4 channels are reserved for state-dependent channel protection, both

characteristics $b_1$-$b_2$ are in mutual proximity, which denotes that the blocking probability for the A and B traffic has been equalized.

## Claims

1. Method of equalizing the blockage probability in a cellular mobile radio system partitioned into a plurality of large cells, belonging to a x-cell cluster and a plurality of small cells belonging to a y-cell cluster overlaid on these large cells, where y is less than x, there being potentially available for a mobile station (mobile) in each small cell a plurality of n + m channels and for a mobile in the area within the associated large cell but outside the pertinent small cell a plurality of m channels is potentially available, characterized in that a plurality k ($0 < k < m$) of specific channels of the m channels are reserved solely for traffic generated within the large cell but outside the pertinent small cell (B traffic) and blocked for traffic generated within the small cell A (A traffic).

2. Method as claimed in claim 1, characterized in that said reserved channels (of the plurality k) are assigned to the large cell according to the algorithm for fixed channel assignment.

3. Method as claimed in claim 1, characterized in that said reserved channels (of the plurality k) are assigned to the large cell according to the algorithm for dynamic channel assignment.

4. Method as claimed in claim 1, characterized in that said reserved channels (of the plurality of k) are assigned to the large cell according to the algorithm for hybrid channel assignment, i.e. the reserved channels are divided up into a number of fixed channels and a number of dynamic channels.

5. Method as claimed in claim 1, characterized in that the k reserved channels do not constitute specific channels, the reservation being dependent on the occupational state among the m channels, such that the A traffic is allowed to occupy one of the m channels solely if less than m-k of the m channels are occupied by A or B traffic.

6. Method as claimed in claim 4, characterized in that rearranging of a call in progress from a channel from the set with reserved dynamic channels to a channel from the set with reserved fixed channels is applied, if a channel among the reserved fixed channels becomes unoccupied.

7. Method as claimed in claims 4 and 6, characterized in that rearranging of a call in progress from a channel from the set with reserved fixed channels to a channel among the m-k channels of the m channels which are not reserved is applied, if a channel among the m-k of the m channels which are not reserved become unoccupied.

8. Method as claimed in claim 1, characterized in that j of the k ($0 < j < k$) reserved channels consist of specific dynamic channels, and that the reservation otherwise depends on the occupational state amongst the remaining m-j channels, such that the A traffic is permitted to occupy one of these m-j channels solely if less than m-k of the m-j channels is occupied by A or B traffic.

9. Method as claimed in claim 8, characterized in that rearranging of a call in progress from a channel from the group with j reserved dynamic channels to a channel among the remaining m-j channels is applied if a channel among the remaining m-j channels become unoccupied.

10. Method as claimed in claim 1-9 characterized in that rearranging of a call in progress, which is established on one of the m channels (N1-Nn), from the channel in question to one of the n channels is applied if one of the n channels becomes unoccupied.

## Patentansprüche

1. Verfahren zur Vergleichmäßigung der Blockierungswahrscheinlichkeit in einem zellularen mobilen Funksystem, das in eine Vielzahl von großen Funkzellen, die einem x-Zellencluster angehören, und in eine Vielzahl von kleinen Funkzellen, die einem y-Zellencluster angehören und die großen Zellen überdecken, unterteilt ist, wobei y kleiner als x ist, wobei potentiell für eine mobile Station (Fahrzeug) in jeder kleinen Zelle eine Vielzahl von n+m Kanälen und für ein Fahrzeug in einem Gebiet innerhalb der assoziierten großen Zelle, aber außerhalb der zugehörigen kleinen Zelle, eine Vielzahl von m Kanälen verfügbar ist, dadurch **gekennzeichnet**, daß eine Vielzahl k (0 < k < m) von spezifischen Kanälen der m Kanäle ausschließlich für Funkverkehr reserviert sind, der innerhalb der großen Zelle, aber außerhalb der zugehörigen kleinen Zelle (B-Verkehr) stattfindet, und daß sie für einen Funkverkehr gesperrt werden, der innerhalb der kleinen A-Zelle (A-Verkehr) stattfindet.

2. Verfahren nach Anspruch 1, dadurch **gekennzeichnet**, daß die reservierten Kanäle (der Vielzahl k) der großen Zelle gemäß dem Algorithmus für feste Kanalbelegung zugewiesen werden.

3. Verfahren nach Anspruch 1, dadurch **gekennzeichnet**, daß die reservierten Kanäle (der Vielzahl k) der großen Zelle gemäß dem Algorithmus für dynamische Kanalbelegung zugewiesen werden.

4. Verfahren nach Anspruch 1, dadurch **gekennzeichnet**, daß reservierte Kanäle (der Vielzahl k) der großen Zelle gemäß dem Algorithmus für hybride Kanalbelegung zugewiesen werden, d.h. daß die reservierten Kanäle in eine Anzahl von festen Kanälen und in eine Anzahl von dynamischen Kanälen unterteilt werden.

5. Verfahren nach Anspruch 1, dadurch **gekennzeichnet**, daß die reservierten k Kanäle keine spezifischen Kanäle bilden und die Reservierung von der Belegungslage der m Kanäle abhängt, derart, daß der A-Verkehr einen der m Kanäle ausschließlich dann belegen kann, wenn m-k der m Kanäle durch A- oder B-Verkehr belegt sind.

6. Verfahren nach Anspruch 4, dadurch **gekennzeichnet**, daß die Umlegung eines laufenden Anrufs von einem Kanal der Gruppe der reservierten dynamischen Kanäle auf einen Kanal der Gruppe der reservierten festen Kanäle dann erfolgt, wenn ein Kanal der reservierten festen Kanäle frei wird.

7. Verfahren nach den Ansprüchen 4 und 5, dadurch **gekennzeichnet**, daß die Umlegung eines laufenden Anrufs von einem Kanal der Gruppe der reservierten festen Kanäle auf einen nicht reservierten Kanal der m-k Kanäle dann erfolgt, wenn unter den m-k der m Kanäle ein nicht reservierter Kanal frei wird.

8. Verfahren nach Anspruch 1, dadurch **gekennzeichnet**, daß j der k (0 < j < k) reservierten Kanäle aus spezifischen dynamischen Kanälen bestehen und daß die Reservierung ansonsten von der Belegungslage der übrigen m-j Kanäle abhängt, derart, daß der A-Verkehr einen dieser m-j Kanäle ausschließlich dann belegen kann, wenn weniger als m-k der m-j Kanäle durch A- oder B-Verkehr belegt sind.

9. Verfahren nach Anspruch 8, dadurch **gekennzeichnet**, daß die Umlegung eines laufenden Anrufs von einem Kanal der Gruppe der j reservierten dynamischen Kanäle auf einen Kanal der übrigen m-j Kanäle dann erfolgt, wenn ein Kanal der reservierten übrigen m-j Kanäle frei wird.

10. Verfahren nach den Ansprüchen 1 bis 9, dadurch **gekennzeichnet**, daß die Umlegung eines laufenden Anrufs, der auf einem der m Kanäle (N1-Nn) liegt, von diesem Kanal auf einen der n Kanäle dann erfolgt, wenn einer der n Kanäle frei wird.

## Revendications

1. Procédé d'égalisation de la probabilité de blocage dans un système de radiotéléphonie mobile cellulaire divisé en un ensemble de grandes cellules, appartenant à une grappe de x cellules, et en un ensemble de petites cellules appartenant à une grappe de y cellules qui sont superposées sur ces grandes cellules, dans lequel y est inférieur à x, dans lequel un ensemble de n + m canaux sont potentiellement disponibles pour une station mobile (ou "mobile") dans chaque petite cellule, et dans lequel un ensemble de m canaux sont potentiellement disponibles pour un mobile dans la zone située à l'intérieur de la grande cellule associée, mais à l'extérieur de la petite cellule considérée, caractérisé en ce qu'un ensemble k (0 < k < m) de canaux spécifiques parmi les m canaux sont réservés exclusivement pour le trafic qui est généré à l'intérieur de la grande cellule mais à l'extérieur de la petite cellule considérée (trafic B) et est bloqué pour le trafic qui est généré à l'intérieur de la petite cellule (trafic A).

2. Procédé selon la revendication 1, caractérisé en ce que les canaux réservés (de l'ensemble k) sont attribués à la grande cellule conformément à l'algorithme pour l'attribution fixe de canaux.

3. Procédé selon la revendication 1, caractérisé en ce que les canaux réservés (de l'ensemble k) sont attribués à la grande cellule conformément à l'algorithme pour l'attribution dynamique de canaux.

4. Procédé selon la revendication 1, caractérisé en ce que les canaux réservés (de l'ensemble k) sont attribués à la grande cellule conformément à l'algorithme pour l'attribution hybride de canaux, c'est-à-dire que les canaux réservés sont divisés en un certain nombre de canaux fixes et en un certain nombre de canaux dynamiques.

5. Procédé selon la revendication 1, caractérisé en ce que les k canaux réservés ne constituent pas des canaux spécifiques, la réservation étant fonction de l'état d'occupation parmi les m canaux, de façon que le trafic A puisse occuper l'un des m canaux seulement si moins de m-k des m canaux sont occupés par du trafic A ou B.

6. Procédé selon la revendication 4, caractérisé en ce que le réarrangement d'un appel en cours, pour le transférer d'un canal dans le jeu comprenant des canaux dynamiques réservés, vers un canal dans le jeu comprenant des canaux fixes réservés, est appliqué si un canal parmi les canaux fixes réservés devient inoccupé.

7. Procédé selon les revendications 4 et 6, caractérisé en ce que le réarrangement d'un appel en cours, pour le transférer d'un canal du jeu comprenant des canaux fixes réservés vers un canal parmi les m-k canaux des m canaux qui ne sont pas réservés est appliqué si un canal parmi les m-k des m canaux qui ne sont pas réservés devient inoccupé.

8. Procédé selon la revendication 1, caractérisé en ce que j des k (0 < j < k) canaux réservés consistent en canaux dynamiques spécifiques, et en ce que la réservation dépend par ailleurs de l'état d'occupation parmi les m-j canaux restants, de façon que le trafic A puisse occuper l'un de ces m-j canaux seulement si moins de m-k des m-j canaux sont occupés par du trafic A ou B.

9. Procédé selon la revendication 8, caractérisé en ce que le réarrangement d'un appel en cours, pour le transférer d'un canal dans le groupe avec j canaux dynamiques réservés vers un canal parmi les m-j canaux restants, est appliqué si un canal parmi les m-j canaux restants devient inoccupé.

10. Procédé selon l'une des revendications 1 à 9, caractérisé en ce que le réarrangement d'un appel en cours, qui est établi sur l'un des m canaux (N1-Nn), pour le faire passer du canal considéré vers l'un des n canaux, est appliqué si l'un des n canaux devient inoccupé.

Fig.1

Fig.2

Fig.3 (Service protection)

Fig.4 (State protection)

Blocking probability

----- A-traffic
——— B-traffic

0.36

0.28

0.20

N = 66
M = 67

0.12

N= 66
M= 67
R = 4

0.04

110.00    130.00    150.00    170.00
Offered traffic (Erlang)

Fig.5